# EUROPEAN PATENT SPECIFICATION

(11) **EP 4 606 537 B1**
(45) Date of publication and mention of the grant of the patent: **18.03.2026**
(21) Application number: 24159603.0
(22) Date of filing: 26.02.2024
(51) Int. Cl.: B26B 13/00, B26B 13/16

(54) **CUTTING TOOL**
SCHNEIDWERKZEUG
OUTIL DE COUPE

(43) Date of publication of application: 27.08.2025
(73) Proprietor: Husqvarna AB, 561 82 Huskvarna (SE)
(72) Inventor: Starke, Jens, 89542 Herbrechtingen (DE); Büllesbach, Sven, 89359 Kötz (DE); Heinrich, Armin, 89415 Lauingen (DE)
(74) Representative: Finkele, Rolf

(56) References cited:
- EP-A1- 4 223 106
- CN-U- 202 068 767
- US-A- 4 341 016
- US-A1- 2006 191 142

## Description

### TECHNICAL FIELD

The present disclosure relates to a cutting tool. More specifically, the present disclosure relates to the cutting tool which allows safe and user-friendly handling, assembly, and disassembly of the cutting tool.

### BACKGROUND

Cutting tools such as secateurs, loppers, pliers are used for performing cutting action using two cutting parts each associated with corresponding handles for ease of handling. Simply put, such tools provide increased mechanical assistance and ease of operation to a common user to conveniently perform operations on objects such as branches having varying dimensions.

However, there may be many instances where working with the cutting tools may wear the cutting parts. The cutting efficiency of the cutting tool may again be restored by replacing the cutting parts which undergo wear or becomes blunt. The replacement of the cutting parts of conventional cutting tools may involve a cumbersome process and may seem highly complex and time consuming, particularly for the common user.

An example of a cutting tool is provided in United States Patent US 4,341,016 A (hereinafter referred to as '016 reference). The '016 reference provides a hand tool comprising two members, i.e., a male blade and a female blade, each formed with a tang portion which extends within an associated handle. The two members are releasably secured to the associated handles by a pivot bolt which passes through apertures in each member and associated handle.

Another example of the cutting tool is provided in Chinese Utility Model CN 202,068,767 U (hereinafter referred to as '767 reference). The '767 reference provides a garden scissoring structure which comprises a first cutting part, a second cutting part, a first grab handle, and a second grab handle. The first cutting part and the second cutting part are coupled to the first grab handle and the second grab handle respectively with screws.

### SUMMARY OF THE INVENTION

In view of the above, it is an objective of the present invention to solve or at least reduce the drawbacks discussed above. The objective is at least partially achieved by a cutting tool according to the present invention.

According to an aspect of the present invention, the cutting tool comprises a first handle, a second handle, a first cutting part comprising a first cutting blade and a first fastening section extending away from the first cutting blade, a second cutting part comprising a second cutting blade and a second fastening section extending away from the second cutting blade, and a biasing means configured to pre-tension the first cutting blade and the second cutting blade away from each other. The first cutting part and the second cutting part are pivotably coupled to each other at a pivot point. Further, the first fastening section is inserted into the first handle, and the second fastening section is inserted into the second handle. The cutting tool is characterized in that the first handle is fixedly coupled with the first fastening section by the biasing means, and the second handle is fixedly coupled with the second fastening section by the biasing means.

The present disclosure advantageously provides an improved cutting tool that primarily comprises two handles, two cutting parts pivotably connected to each other, and the biasing means being toollessly disassemblable and assemblable. The two handles are the first handle and the second handle that may have shape and size honoring the ergonomics of the cutting tool, i.e., the first handle and the second handle may have good grip for the hands of the user, and may have size enough to allow sufficient grasp by the user. Further, the two cutting parts are the first cutting part and the second cutting part, wherein the first cutting part comprises the first cutting blade and the first fastening section, and the second cutting part comprises the second cutting blade and the second fastening section. The first fastening section is inserted into the first handle such that the first fastening section is removably coupled to the first handle using the force from the biasing means. The second fastening section is inserted into the second handle such that the second fastening section is removably coupled to the second handle using the force from the biasing means. At the same time, the biasing means is removably connected to the first fastening section and the second fastening section. Thus, the cutting tool may be easy to assemble and disassemble by an end user for maintenance and/or recycling without the need of any tool.

According to an exemplary embodiment of the invention, the biasing means comprises a first end and a second end opposite the first end, wherein first handle is fixedly coupled with the first fastening section by the first end of the biasing means, and the second handle is fixedly coupled with the second fastening section by the second end of the biasing means. The biasing means irrespective of the type of the biasing means may have two ends, namely the first end and the second end disposed at a distance from each other respectively on two opposite ends of the biasing means. The first end may be removably coupled to the first fastening section such that coupling between the first fastening section and the first handle may be possible. Likewise, the second end may be removably coupled to the second fastening section such that coupling between the second fastening section and the second handle may be possible.

According to an exemplary embodiment of the invention, the first end of the biasing means further extends through a first opening, particularly a through opening, in the first handle such that the first handle is fixedly coupled to the first cutting part, and the second end of the biasing means further extends through a second opening, particularly a through opening, in the second handle such that the second handle is fixedly coupled to the second cutting part. The first handle may comprise the first opening and the second handle may comprise the second opening. The through opening may extend through one side wall of the respective handle. Further, the through opening may form a blind hole inside the respective handle, wherein a side wall opposite of the side wall comprising the through opening, may be a side wall without a through opening. The through opening may have any shape and size as per application requirement, the biasing means design, among other factors. The first opening may provide an interface for the first end of the biasing means such that the first end may be plunged into the first handle to be removably engaged or coupled with the first fastening section, particularly in order to allow removable coupling of the first handle with the first fastening section. The second opening may provide an interface for the second end of the biasing means such that the second end may be plunged into the second handle to be removably engaged or coupled with the second fastening section in order to allow removable coupling of the second handle with the second fastening section.

According to an exemplary embodiment of the invention, the first handle and the first fastening section are toollessly coupled, particularly fixedly coupled by hand and without the use of a tool, and/or the second handle and the second fastening section are toollessly coupled, particularly fixedly coupled by hand and without the use of a tool. The cutting tool may be advantageously assembled simply and efficiently by using the restoring force of the biasing means, without the need for any fastening tool and/ or fasteners, particularly additional part fasteners.

According to an exemplary embodiment of the invention, the first fastening section comprises a first fastening means, and/or the second fastening section comprises a second fastening means. The first fastening means may be provided with the first fastening section to allow removable engagement between the first fastening section and the first end of the biasing means. The second fastening means may be provided with the second fastening section to allow removable engagement between the second fastening section and the second end of the biasing means. Thereby, the biasing means may substantially at all times be reliably connected or coupled to the first fastening section and the second fastening section to ensure the reliable connection between the first handle and the first cutting part respectively the second handle and the second cutting part.

According to an exemplary embodiment of the invention, the first handle comprises the first opening, wherein the first opening and the first fastening means overlap each other, and are arranged opposite the second fastening section, when the first fastening section is inserted into the first handle. The first fastening means may be formed in the first fastening section in a manner such that when the first fastening section is inserted into the first handle, the first fastening means may face in a direction towards the second cutting part pivotably coupled to the first cutting part at the pivot point.

According to an exemplary embodiment of the invention, the second handle comprises the second opening, wherein the second opening and the second fastening means overlap each other, and are arranged opposite the first fastening section, when the second fastening section is inserted into the second handle. The second fastening means may be formed in the second fastening section in a manner such that when the second fastening section is inserted into the second handle, the second fastening means may face in a direction towards the first cutting part pivotably coupled to the second cutting part at the pivot point. Thus, when the user may operate the cutting tool, the biasing means may get sandwiched or pressed between the first fastening means and the second fastening means and may get restored to original position when the user may release the operating force on the cutting tool, particularly on the first handle and the second handle.

According to an exemplary embodiment of the invention, the first fastening means and the second fastening means are formed substantially identical, and/or wherein the first fastening means and/or the second fastening means is/are a protrusion with two adjacent recesses, and/or wherein the first fastening means and/or the second fastening means is/are configured to engage a respective end of the biasing means. The first fastening means as well as the second fastening means may be substantially identical and comprise a protrusion with two adjacent recesses. For example, when the biasing means may be a compression spring, an end portion of the compression spring may be securely inserted into the recesses and the protrusion may securely support inner surfaces of the end portion of the compression spring. Additionally, the outer edges of the recesses positioned opposite to the protrusion, may securely support outer surfaces of the end portion of the compression spring.

According to an exemplary embodiment of the invention, the first fastening means and/or the second fastening means is/are elongate protrusions configured to engage the respective end of the biasing means. The first fastening means and/or the second fastening means may be an elongate protrusion with any shape and size feasible for smooth assembly of the cutting tool. The first fastening means and the second fastening means may be able to provide firm but removable grip to the first end respectively the second end of the biasing means such that the force from the biasing means is efficiently transferred to the first fastening section as well as the second fastening section supporting toolless coupling of the cutting tool.

According to an exemplary embodiment of the invention, the biasing means is at least one of a compression spring, a coil spring, a spring blade, and a flat spring. The biasing means may be advantageously configured to allow the assembly of the first handle with the first cutting part and the second handle with the second cutting part. The first end of the biasing means may intrude into the first handle (particularly via the first opening in the first handle) and further into the first fastening means. Further, the second end of the biasing means may intrude into the second handle (particularly via the second opening in the second handle and further into the second fastening means. Thereby, the biasing means may fix the first cutting part in the first handle and the second cutting part in the second handle in the toolless, simple, and fast manner.

According to an exemplary embodiment of the invention, the first handle and/or the second handle are formed by at least one of the following: injection molding, aluminum die-casting. zinc die-casting, molding, 3D printing technology, particularly metal or plastics, sintering and punching. The first handle and/or the second handle may be formed from any suitable durable material, particularly durable plastic material, having wear resistant characteristics. When the first handle and/or the second handle are formed by injection molding, the first handle and/or the second handle may be efficiently and economically produced. However, it may be noted that the material and manufacturing technique for manufacturing the first handle and/or the second handle does not limit the scope of the present disclosure in any manner.

According to an exemplary embodiment of the invention, the first handle or the second handle comprises a slidable locking element to selectively lock a rotation of the first cutting part and the second cutting part relative to each other. The cutting tool may have the locking element slidably disposed on one of the handles to slide between a first position and a second position. In the first position, the locking element may entirely lock the rotation of the first cutting blade and the second cutting blade relative to each other. Further, in the second position, the locking element may allow complete and maximal possible rotation of the first cutting blade and the second cutting blade relative to each other. Further, advantageously the locking element may be used for hand-size adjustments. For example, a third position in which the locking element may be slid halfway between the first position and the second position for operation of the cutting tool, may be provided which allows a rotation in an angle used with small-size hands of the user.

According to an exemplary embodiment of the invention, the first cutting part and the second cutting part are pivotably coupled to each other at the pivot point using a locking screw and a tightening nut, particularly a hexagonal nut, knurled nut or notched nut, screwed onto the locking screw. The tightening nut may be any one of the hexagonal nut, knurled or notched nut as per the application requirement, and/ or ease of operation of the nut. For example, the knurled nut may be easy to grip and may further be preferred when the first cutting part and the second cutting part of the cutting tool is often required to be decoupled from each other. The locking screw may comprise a head and a shaft portion, in particular wherein the head may comprise an opening, particularly a hexagonal opening, in which a tool may engage.

According to an exemplary embodiment of the invention, the first handle and/or the second handle is/are formed as a substantially non-hollow respectively one-piece structure, wherein the first handle and/or the second handle comprises a receptacle formed inside. Further, the shape of the receptacle formed inside the first handle substantially corresponds to the outer shape of the first fastening section. Thereby, the surface of the receptacle and the outer surface of the first fastening section may be in at least slight contact. Hence, this may contribute to the connection of the first cutting part and the first handle. Additionally or alternatively, the shape of the receptacle formed in the second handle substantially corresponds to the outer shape of the second fastening section. Thereby, the surface of the receptacle and the outer surface of the second fastening section may be in at least slight contact. Hence, this may contribute to the connection of the second cutting part and the second handle.

According to an exemplary embodiment of the invention, the cutting tool is selected from the group comprising of a secateurs, a shear, a pruner, and a scissor. The secateur, the shear, the pruner, and the scissor may be used in variety of gardening applications such as cutting, pruning, trimming, and shearing of hedges, shrubs, plants, and the like.

According to an exemplary embodiment of the invention, the cutting tool is an anvil cutting tool, or a bypass cutting tool. The cutting tool may be the anvil cutting tool or the bypass cutting tool depending on the type of cutting blades used. The anvil cutting tool may be preferred for cutting finger-thick branches and solid wood whereas the bypass cutting tool may be preferred cutting softer living stems and where sharp, precise cuts may be desired.

Before discussing the invention with the help of the drawings the invention will be briefly discussed in general. A cutting tool is provided with a first handle and an associated first cutting part, a second handle and an associated second cutting part, and a biasing means with a first end and a second end. The first cutting part comprises a first fastening section and a first cutting blade and the second cutting part comprises a second fastening section and a second cutting blade. Further, the first fastening section and the second fastening section comprises a first fastening means and a second fastening means respectively. During assembly of the first handle with the first cutting part and the second handle with the second cutting part, the first end of the biasing means and the second end of the biasing means plunges through the first handle (particularly via a first opening in the first handle) and the second handle (particularly via a second opening in the second handle) respectively and further into the first fastening means and the second fastening means respectively and fixes the first cutting part and the second cutting part in the first handle and the second handle respectively.

The cutting tool according to the present invention may be cost-effective, completely separable, and recyclable.

According to an exemplary embodiment of the invention, the cutting tool may involve fixture of the cutting parts with the biasing means to connect the handles with the cutting parts.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates an exploded view of a cutting tool in accordance with an exemplary embodiment of the present disclosure;
**FIG. 2** illustrates an assembled view of a cutting tool in accordance with an exemplary first embodiment of the present disclosure;
**FIG. 3** illustrates an engagement between a first cutting part, a second cutting part and a biasing means in accordance with an exemplary embodiment of the present disclosure; and
**FIG. 4** illustrates an assembly of a first handle with a first cutting part and a second handle with a second cutting part using a biasing means in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

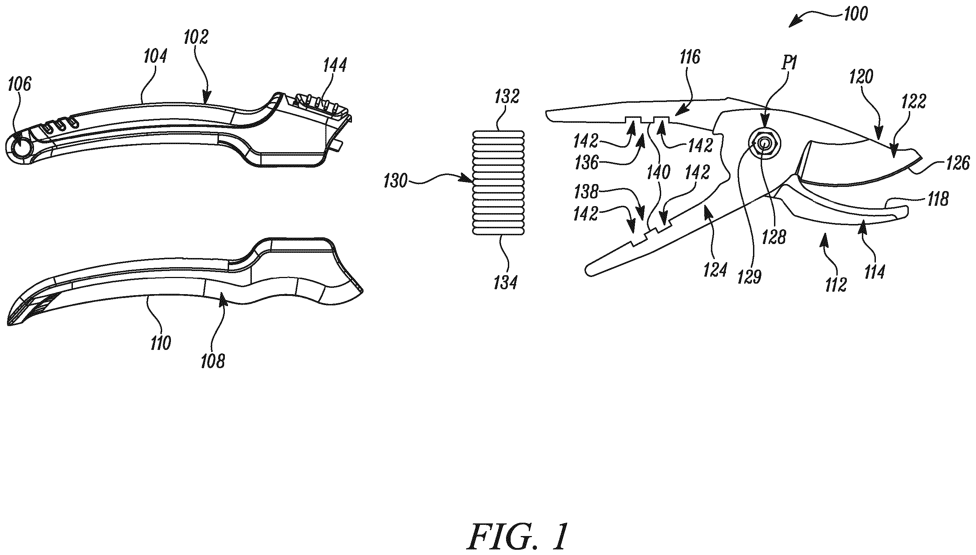

**FIG. 1** illustrates an exploded view of a cutting tool **100.** The cutting tool **100** is an anvil cutting tool, or a bypass cutting tool selected from the group comprising of a secateurs, a shear, a pruner, and a scissor. Specifically, the cutting tool **100,** as illustrated in **FIG. 1** is a secateurs.

The cutting tool **100** includes a first handle **102,** which is a substantially non-hollow respectively one-piece structure having a receptacle formed therein, wherein the shape of the receptacle corresponds to the outer shape of the first fastening section **116.** Further, the first handle **102** is formed by injection molding. The first handle **102** of the cutting tool **100** includes a first gripping portion **104** to firmly grip the first handle **102** by a user. The first gripping portion **104** has a generally curved profile. The first handle **102** further includes a pass-through hole **106** configured to allow hanging of the cutting tool **100** on a storage rack, or wall when the cutting tool **100** is not in use. The hole **106** may allow passage of a protrusion of the storage rack therethrough, or the hole **106** may allow passage of a fastener coupled with the wall to support hanging of the cutting tool **100.** Alternatively, a cord or ribbon may be coupled to the hole **106.** The cutting tool **100** also includes a second handle **108,** which is a substantially non-hollow respectively one-piece structure having a receptacle formed therein, wherein the shape of the receptacle substantially corresponds to the outer shape of the second fastening section **116.** Further, the second handle **108** is formed by injection molding. The second handle **108** of the cutting tool **100** includes a second gripping portion **110** to firmly grip the second handle **108** by the user. The second gripping portion **110** has a generally curved profile. Further, either the first handle **102** or the second handle **108** includes a slidable locking element **144.** However, as illustrated in **FIG. 1****,** the first handle **102** includes the slidable locking element **144.**

The cutting tool **100** further includes a first cutting part **112.** The first cutting part **112** includes a first cutting blade **114** and a first fastening section **116** extending away from the first cutting blade **114.** The first cutting blade **114** includes a first cutting edge **118** and the first fastening section **116** includes a first fastening means **136.** The first cutting part **112** is formed as a one-piece part and/or is made from metal. Further, the cutting tool **100** includes a second cutting part **120.** The second cutting part **120** includes a second cutting blade **122** and a second fastening section **124** extending away from the second cutting blade **122.** The second cutting blade **122** includes a second cutting edge **126** and the second fastening section **124** includes a second fastening means **138.** The second cutting part **112** is formed as a one-piece part and/or is made from metal. Further, the first fastening means **136** and the second fastening means **138** are formed substantially identical. The first fastening means **136** and the second fastening means **138** as illustrated in **FIG. 1****,** are a protrusion **140** with two adjacent recesses **142.** However, the first fastening means **136** and the second fastening means **138** may alternatively and simply be elongate protrusions respectively.

Further, the first cutting part **112** includes a first pivot hole, preferably a circular pivot hole and the second cutting part **120** also includes a second pivot hole, preferably a circular pivot hole, such that the first pivot hole overlaps with the second pivot hole when the first cutting part **112** and the second cutting part **120** are rotatably connected to each other. The first cutting part **112** and the second cutting part **120** are pivotably coupled to each other at a pivot point **P1.** The pivot point **P1** is provided with a locking screw **128** and a tightening nut **129** screwed on the locking screw **128** having a hexagonal outer shape

Further, the cutting tool **100** includes a biasing means **130** configured to pre-tension the first cutting blade **114** and the second cutting blade **122** away from each other. As illustrated in FIG. 1, the biasing means **130** is a compression spring comprising a first end **132** and a second end **134** opposite the first end **132.**

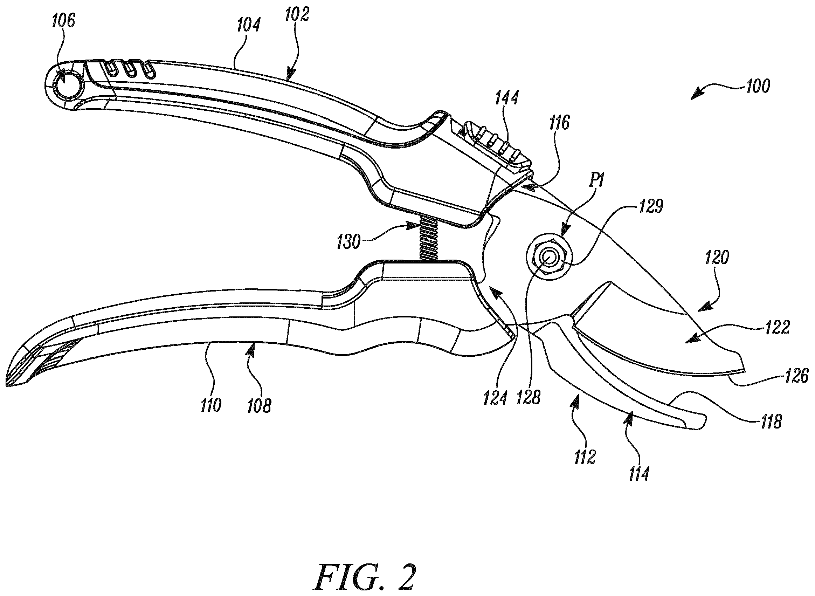

**FIG. 2** illustrates an assembled view of the cutting tool **100.** The cutting tool **100** comprises the first handle **102** and the second handle **108,** the biasing means **130,** the first cutting part **112** and the second cutting part **120,** wherein the first cutting part **112** and the second cutting part **120** are pivotably coupled to each other at the pivot point **P1** such that they removably engage with each other to form a cutting sub-assembly of the cutting tool **100.** During assembly of the first handle **102** with the first cutting part **112** and the second handle **108** with the second cutting part **120,** the first fastening section **116** is removably inserted into the first handle **102** and the second fastening section **124** are is removably inserted into the second handle **108.** Further, the first handle **102** is fixedly coupled with the first fastening section **116** by the biasing means **130,** and the second handle **108** is fixedly coupled with the second fastening section **124** by the biasing means **130.** Thus, the first handle **102** and the first fastening section **116** are toollessly coupled, particularly fixedly coupled by hand and without the use of a tool. Further, the second handle **108** and the second fastening section **124** are toollessly coupled, particularly fixedly coupled by hand and without the use of the tool.

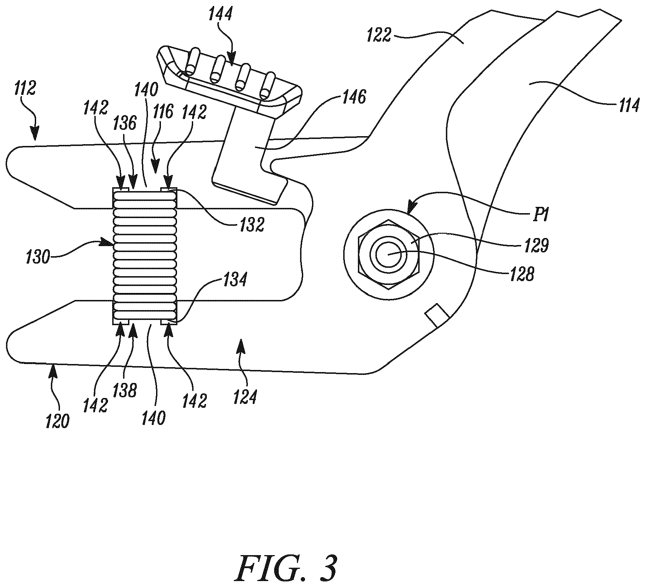

**FIG. 3** illustrates an engagement between the first cutting part **112,** the second cutting part **120** and the biasing means **130.** The biasing means **130** of the present disclosure is configured to allow coupling of the first handle **102** with the first fastening section **116,** and the coupling of the second handle **108** with the second fastening section **124**,when the first fastening section **116** is inserted into the first handle **102** and the second fastening section **124** is inserted into the second handle **108.**

The first handle **102** is fixedly coupled with the first fastening section **116** by the first end **132** of the biasing means **130,** and the second handle **108** is fixedly coupled with the second fastening section **124** by the second end **134** of the biasing means **130.** Further, the first fastening section **116** includes the first fastening means **136** to engage with the first end **132** of the biasing means **130** and the second fastening section **124** comprises the second fastening means **138** to engage with the second end **134** of the biasing means **130** such that when the first fastening means **136** is engaged with the first end **132** of the biasing means **130** and when the second fastening means **138** is engaged with the second end **134** of the biasing means **130,** the biasing means **130** applies a restoring force on the first fastening section **116** and the second fastening section **124** to fixedly couple them with the first handle **102** and the second handle **108** respectively.

The first fastening means **136** as illustrated in **FIG. 3****,** comprises the protrusion **140** with two adjacent recesses **142** to engage the first end **132** of the biasing means **130.** The protrusions **140** at least partially engages with an inner surface of the first end **132** of the biasing means **130.** The recesses **142** at least partially engage with the outer surface of the first end **132** of the biasing means **130.** The second fastening means **138** as illustrated in **FIG. 3****,** comprises the protrusion **140** with two adjacent recesses **142** to engage the second end **134** of the biasing means **130.** The protrusion **140** at least partially engages with an inner surface of the second end **134** of the biasing means **130.** The recesses **142** at least partially engage with the outer surface of the second end **134** of the biasing means **130.**

With continuous reference to **FIG. 3****,** after the assembly of the cutting tool **100** and during the non-use of the cutting tool **100,** the cutting tool **100,** particularly a rotation of the first cutting part **112** and the second cutting part **120** relative to each other, are locked using the slidable locking element **144.** In other words, the first handle **102** of the cutting tool **100** includes the slidable locking element **144** to selectively lock the first cutting part **112** and the second cutting part **120** of the cutting tool **100.** The slidable locking element **144** includes an L-shaped bracket **146** that selectively engages with a locking protrusion formed at a portion between the second fastening section **124** and the second cutting blade **122** to selectively lock the cutting functionality of the cutting tool **100.**

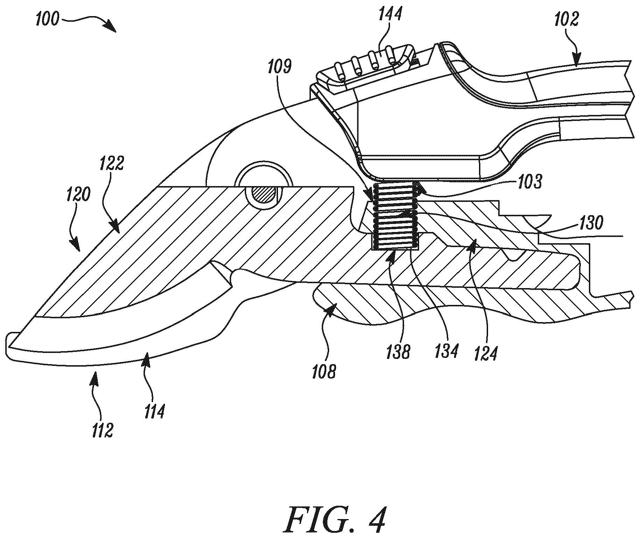

**FIG. 4** illustrates an assembly of the first handle **102** with the first cutting part **112** and the second handle **108** with the second cutting part **120** using the biasing means **130.** During assembly of the first handle **102** with the first cutting part **112** and the second handle **108** with the second cutting part **120,** the first fastening section **116** of the first cutting part **112** is removably inserted into the first handle **102** and the second fastening section **124** of the second cutting part **120** is removably inserted into the second handle **108.** The biasing means **130** is configured to allow coupling of the first handle **102** with the first fastening section **116** of the first cutting part **112,** and coupling of the second handle **108** with the second fastening section **124** of the second cutting part **120.**

Further, the first handle **102** is fixedly coupled with the first fastening section **116** by the first end **132** of the biasing means **130,** and the second handle **108** is fixedly coupled with the second fastening section **124** by the second end **134** of the biasing means **130** such that the first end **132** of the biasing means **130** lunges into the first handle **102** to engage with the first fastening means **136** of the first fastening section **116,** and the second end **134** of the biasing means **130** plunges into the second handle **108** to engage with the second fastening means **138** of the second fastening section **124.**

Further, the first handle **102** includes a first opening **103** such that the first opening **103** and the first fastening means **136** overlap each other when seen in a direction from the second handle **108** towards the first handle **102.** Further, the first opening **103** and the first fastening means **136** are arranged opposite the second fastening section **124,** when the first fastening section **116** is inserted into the first handle **102.** The first end **132** of the biasing means **130** engages with the first fastening means **136** by extending through the first opening **103** particularly a through opening **103** in a side wall of the first handle **102,** such that the first handle **102** is fixedly coupled to the first cutting part **112.**

Likewise, the second handle **108** comprises a second opening **109,** such that the second opening **109** and the second fastening means **138** overlap each other when seen in a direction from the first handle **102** towards the second handle **108.** Further, the second opening **103** and the second fastening means **138** are arranged opposite the first fastening section **116,** when the second fastening section **124** is inserted into the second handle **108.** The second end **134** of the biasing means **130** engages with the second fastening means **138** by extending through the second opening **109,** particularly a through opening **109** in a side wall of the second handle **108,** such that the second handle **108** is fixedly coupled to the second cutting part **120.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **102**: First Handle
- **103**: First Opening
- **104**: First gripping portion
- **106**: Hole
- **108**: Second Handle
- **109**: Second Opening
- **110**: Second gripping portion
- **112**: First Cutting Part
- **114**: First Cutting Blade
- **116**: First Fastening Section
- **118**: First Cutting Edge
- **120**: Second Cutting Part
- **122**: Second Cutting Blade
- **124**: Second Fastening Section
- **126**: Second Cutting Edge
- **128**: Locking Screw
- **129**: Tightening Nut
- **130**: Biasing Means
- **132**: First End
- **134**: Second End
- **136**: First Fastening Means
- **138**: Second Fastening Means
- **140**: Protrusion
- **142**: Recesses
- **144**: Slidable Locking Element
- **146**: L-Shaped Bracket
- **P1**: Pivot Point

## Claims

1. A cutting tool **(100),** comprising:
a first handle **(102),**
a second handle **(108),**
a first cutting part **(112)** comprising a first cutting blade **(114)** and a first fastening section **(116)** extending away from the first cutting blade **(114),**
a second cutting part **(120)** comprising a second cutting blade **(122)** and a second fastening section **(124)** extending away from the second cutting blade **(122),** and
a biasing means **(130)** configured to pre-tension the first cutting blade **(114)** and the second cutting blade **(122)** away from each other,
wherein the first cutting part **(112)** and the second cutting part **(120)** are pivotably coupled to each other at a pivot point **(P1),**
wherein the first fastening section **(116)** is inserted into the first handle **(102),** wherein the second fastening section **(124)** is inserted into the second handle **(108),**
**characterized in that:**
wherein the first handle **(102)** is fixedly coupled with the first fastening section **(116)** by the biasing means **(130),** and
wherein the second handle **(108)** is fixedly coupled with the second fastening section **(124)** by the biasing means **(130).**

2. The cutting tool **(100)** according to claim 1,
wherein the biasing means **(130)** comprises a first end **(132)** and a second end **(134)** opposite the first end **(132),**
wherein first handle **(102)** is fixedly coupled with the first fastening section **(116)** by the first end **(132)** of the biasing means **(130),** and
wherein the second handle **(108)** is fixedly coupled with the second fastening section **(124)** by the second end **(132)** of the biasing means **(130).**

3. The cutting tool **(100)** according to claim 2,
wherein the first end **(132)** of the biasing means **(130)** further extends through a first opening **(103),** particularly a through opening **(103),** in the first handle **(102)** such that the first handle **(102)** is fixedly coupled to the first cutting part **(112),**
and
wherein the second end **(134)** of the biasing means **(130)** further extends through a second opening **(109),** particularly a through opening **(109),** in the second handle **(108)** such that the second handle **(108)** is fixedly coupled to the second cutting part **(120).**

4. The cutting tool **(100)** according to any one of the preceding claims,
wherein the first handle **(102)** and the first fastening section **(116)** are toollessly coupled, particularly fixedly coupled by hand and without the use of a tool,
and/or
wherein the second handle **(108)** and the second fastening section **(124)** are toollessly coupled, particularly fixedly coupled by hand and without the use of a tool.

5. The cutting tool **(100)** according to any one of the preceding claims,
wherein the first fastening section **(116)** comprises a first fastening means **(136),** and/or
wherein the second fastening section **(124)** comprises a second fastening means **(138).**

6. The cutting tool **(100)** according to claim 5,
wherein the first handle **(102)** comprises the first opening **(103),**
wherein the first opening **(103)** and the first fastening means **(136)** overlap each other, and are arranged opposite the second fastening section **(124),** when the first fastening section **(116)** is inserted into the first handle **(102).**

7. The cutting tool **(100)** according to claim 5 or claim 6,
wherein the second handle **(108)** comprises the second opening **(109),**
wherein the second opening **(109)** and the second fastening means **(138)** overlap each other, and are arranged opposite the first fastening section **(116),** when the second fastening section **(124)** is inserted into the second handle **(108).**

8. The cutting tool **(100)** according to any one of the claims 5 to 7,
wherein the first fastening means **(136)** and the second fastening means **(138)** are formed substantially identical, and/or
wherein the first fastening means **(136)** and/or the second fastening means **(138)** is/are a protrusion **(140)** with two adjacent recesses **(142),** and/or
wherein the first fastening means **(136)** and/or the second fastening means **(138)** is/are configured to engage a respective end **(132, 134)** of the biasing means **(130),** and/or
in particular wherein the two adjacent recesses **(142)** are formed adjacent to the protrusion **(140),** and on opposite sides of the protrusion **(140).**

9. The cutting tool **(100)** according to any one of the claims 5 to 7,
wherein the first fastening means **(136)** and/or the second fastening means **(138)** is/are an elongate protrusion configured to engage the first end **(132)** respectively the second end **(134)** of the biasing means **(130).**

10. The cutting tool **(100)** according to any one of the claims,
wherein the biasing means **(130)** is at least one of a compression spring, a coil spring, a spring blade, and a flat spring.

11. The cutting tool **(100)** according to any one of the claims,
wherein the first handle **(102)** and/or the second handle **(108)** are formed by at least one of the following: injection molding, aluminum die-casting. zinc die-casting, molding, 3D printing technology, particularly metal or plastics, sintering and punching.

12. The cutting tool **(100)** according to any one of the claims,
wherein the first handle **(102)** or the second handle **(108)** comprises a slidable locking element **(144)** to selectively lock a relative rotation of the first cutting part **(112)** and the second cutting part **(120)** of the cutting tool **(100).**

13. The cutting tool **(100)** according to any one of the claims,
wherein the first cutting part **(112)** and the second cutting part **(120)** are pivotably coupled to each other at the pivot point **(P1)** using a locking screw **(128)** and a tightening nut **(129),** particularly a hexagonal nut **(129),** a knurled nut or a notched nut, screwed onto the locking screw **(128).**

14. The cutting tool **(100)** according to any one of the claims,
wherein the cutting tool **(100)** is selected from the group comprising of a secateurs, a shear, a pruner, and a scissor.

15. The cutting tool **(100)** according to any one of the claims,
wherein the cutting tool **(100)** is an anvil cutting tool, or a bypass cutting tool.

## Patentansprüche

1. Schneidwerkzeug **(100),** umfassend:
einen ersten Griff **(102),**
einen zweiten Griff **(108),**
ein erstes Schneidteil **(112),** das eine erste Schneidklinge **(114)** und einen ersten Befestigungsabschnitt **(116)** umfasst, der sich von der ersten Schneidklinge **(114)** weg erstreckt,
ein zweites Schneidteil **(120),** das eine zweite Schneidklinge **(122)** und einen zweiten Befestigungsabschnitt **(124)** umfasst, der sich von der zweiten Schneidklinge **(122)** weg erstreckt, und
ein Vorspannmittel **(130),** das konfiguriert ist, um die erste Schneidklinge **(114)** und die zweite Schneidklinge **(122)** voneinander weg vorzuspannen,
wobei das erste Schneidteil **(112)** und das zweite Schneidteil **(120)** an einem Drehpunkt **(P1)** schwenkbar miteinander gekoppelt sind,
wobei der erste Befestigungsabschnitt **(116)** in den ersten Griff **(102)** eingesetzt ist,
wobei der zweite Befestigungsabschnitt **(124)** in den zweiten Griff **(108)** eingesetzt ist,
**dadurch gekennzeichnet, dass:**
wobei der erste Griff **(102)** fest mit dem ersten Befestigungsabschnitt **(116)** durch das Vorspannmittel **(130)** gekoppelt ist, und
wobei der zweite Griff **(108)** fest mit dem zweiten Befestigungsabschnitt **(124)** durch das Vorspannmittel **(130)** gekoppelt ist.

2. Schneidwerkzeug **(100)** nach Anspruch 1,
wobei das Vorspannmittel **(130)** ein erstes Ende **(132)** und ein zweites Ende **(134)** gegenüber dem ersten Ende **(132)** umfasst,
wobei der erste Griff **(102)** fest mit dem ersten Befestigungsabschnitt **(116)** durch das erste Ende **(132)** des Vorspannmittels **(130)** gekoppelt ist, und
wobei der zweite Griff **(108)** fest mit dem zweiten Befestigungsabschnitt **(124)** durch das zweite Ende **(132)** des Vorspannmittels **(130)** gekoppelt ist.

3. Schneidwerkzeug **(100)** nach Anspruch 2,
wobei sich das erste Ende **(132)** des Vorspannmittels **(130)** ferner durch eine erste Öffnung **(103),** insbesondere eine Durchgangsöffnung **(103),** in dem ersten Griff **(102)** hindurch erstreckt, derart, dass der erste Griff **(102)** fest an das erste Schneidteil **(112)** gekoppelt ist, und
wobei sich das zweite Ende **(134)** des Vorspannmittels **(130)** ferner durch eine zweite Öffnung **(109),** insbesondere eine Durchgangsöffnung **(109),** in dem zweiten Griff **(108)** hindurch erstreckt, derart, dass der zweite Griff **(108)** fest an das zweite Schneidteil **(120)** gekoppelt ist.

4. Schneidwerkzeug **(100)** nach einem der vorstehenden Ansprüche, wobei der erste Griff **(102)** und der erste Befestigungsabschnitt **(116)** werkzeuglos gekoppelt, insbesondere von Hand und ohne Verwendung eines Werkzeugs fest gekoppelt sind, und/oder
wobei der zweite Griff **(108)** und der zweite Befestigungsabschnitt **(124)** werkzeuglos gekoppelt, insbesondere von Hand und ohne Verwendung eines Werkzeugs fest gekoppelt sind.

5. Schneidwerkzeug **(100)** nach einem der vorstehenden Ansprüche, wobei der erste Befestigungsabschnitt **(116)** ein erstes Befestigungsmittel **(136)** umfasst, und/oder
wobei der zweite Befestigungsabschnitt **(124)** ein zweites Befestigungsmittel **(138)** umfasst.

6. Schneidwerkzeug **(100)** nach Anspruch 5,
wobei der erste Griff **(102)** die erste Öffnung **(103)** umfasst,
wobei sich die erste Öffnung **(103)** und das erste Befestigungsmittel **(136)** überlappen und gegenüber dem zweiten Befestigungsabschnitt **(124)** angeordnet sind, wenn der erste Befestigungsabschnitt **(116)** in den ersten Griff **(102)** eingesetzt ist.

7. Schneidwerkzeug **(100)** nach Anspruch 5 oder Anspruch 6,
wobei der zweite Griff **(108)** die zweite Öffnung **(109)** umfasst,
wobei sich die zweite Öffnung **(109)** und das zweite Befestigungsmittel **(138)** überlappen und gegenüber dem ersten Befestigungsabschnitt **(116)** angeordnet sind, wenn der zweite Befestigungsabschnitt **(124)** in den zweiten Griff **(108)** eingesetzt ist.

8. Schneidwerkzeug **(100)** nach einem der Ansprüche 5 bis 7,
wobei das erste Befestigungsmittel **(136)** und das zweite Befestigungsmittel **(138)** im Wesentlichen identisch ausgebildet sind, und/oder
wobei das erste Befestigungsmittel **(136)** und/oder das zweite Befestigungsmittel **(138)** ein Vorsprung **(140)** mit zwei benachbarten Aussparungen **(142)** ist/sind, und/oder
wobei das erste Befestigungsmittel **(136)** und/oder das zweite Befestigungsmittel **(138)** konfiguriert ist/sind, um ein jeweiliges Ende **(132, 134)** des Vorspannmittels **(130)** in Eingriff zu bringen, und/oder
insbesondere wobei die zwei benachbarten Aussparungen **(142)** benachbart zu dem Vorsprung **(140)** ausgebildet sind und auf gegenüberliegenden Seiten des Vorsprungs **(140)** angeordnet sind.

9. Schneidwerkzeug **(100)** nach einem der Ansprüche 5 bis 7,
wobei das erste Befestigungsmittel **(136)** und/oder das zweite Befestigungsmittel **(138)** ein länglicher Vorsprung ist/sind, der/die konfiguriert ist/sind, um mit dem ersten Ende **(132)** beziehungsweise dem zweiten Ende **(134)** des Vorspannmittels **(130)** in Eingriff zu stehen.

10. Schneidwerkzeug **(100)** nach einem der Ansprüche,
wobei das Vorspannmittel **(130)** mindestens eines von einer Druckfeder, einer Schraubenfeder, einem Federblatt und einer Flachfeder ist.

11. Schneidwerkzeug **(100)** nach einem der Ansprüche,
wobei der erste Griff **(102)** und/oder der zweite Griff **(108)** durch mindestens eines der folgenden ausgebildet sind: Spritzgießen, Aluminium-Druckguss, Zink-Druckguss, Formgebung, 3D-Druck-Technologie, insbesondere Metall oder Kunststoffe, Sintern und Stanzen.

12. Schneidwerkzeug **(100)** nach einem der Ansprüche,
wobei der erste Griff **(102)** oder der zweite Griff (108) ein verschiebbares Verriegelungselement **(144)** umfasst, um selektiv eine relative Drehung des ersten Schneidteils **(112)** und des zweiten Schneidteils **(120)** des Schneidwerkzeugs **(100)** zu verriegeln.

13. Schneidwerkzeug **(100)** nach einem der Ansprüche,
wobei das erste Schneidteil **(112)** und das zweite Schneidteil **(120)** am Drehpunkt **(P1)** mittels einer Sicherungsschraube **(128)** und einer auf die Sicherungsschraube **(128)** aufgeschraubten Spannmutter **(129),** insbesondere einer Sechskantmutter **(129),** einer Rändelmutter oder einer Kerbmutter, schwenkbar miteinander gekoppelt sind.

14. Schneidwerkzeug **(100)** nach einem der Ansprüche,
wobei das Schneidwerkzeug **(100)** aus der Gruppe ausgewählt ist, die eine Gartenschere, eine Großschere, eine Astschere und eine Schere umfasst.

15. Schneidwerkzeug **(100)** nach einem der Ansprüche,
wobei das Schneidwerkzeug **(100)** ein Amboss-Schneidwerkzeug oder ein Bypass-Schneidwerkzeug ist.

## Revendications

1. Outil de coupe **(100),** comprenant :
une première poignée **(102),**
une seconde poignée **(108),**
une première partie de coupe **(112)** comprenant une première lame de coupe **(114)** et une première section de fixation **(116)** s'étendant à l'écart de la première lame de coupe **(114),**
une seconde partie de coupe **(120)** comprenant une seconde lame de coupe **(122)** et une seconde section de fixation **(124)** s'étendant à l'écart de la seconde lame de coupe **(122),** et
un moyen de sollicitation **(130)** conçu pour précontraindre la première lame de coupe **(114)** et la seconde lame de coupe **(122)** l'une par rapport à l'autre,
dans lequel la première partie de coupe **(112)** et la seconde partie de coupe **(120)** sont accouplées de manière pivotante l'une à l'autre au niveau d'un point de pivotement **(P1),**
dans lequel la première section de fixation **(116)** est insérée dans la première poignée **(102),**
dans lequel la seconde section de fixation **(124)** est insérée dans la seconde poignée **(108),**
**caractérisé en ce que :**
dans lequel la première poignée **(102)** est accouplée de manière fixe à la première section de fixation **(116)** par le moyen de sollicitation **(130),** et
dans lequel la seconde poignée **(108)** est accouplée de manière fixe à la seconde section de fixation **(124)** par le moyen de sollicitation **(130).**

2. Outil électrique **(100)** selon la revendication 1,
dans lequel le moyen de sollicitation **(130)** comprend une première extrémité **(132)** et une seconde extrémité **(134)** opposée à la première extrémité **(132),**
dans lequel la première poignée **(102)** est accouplée de manière fixe à la première section de fixation **(116)** par la première extrémité **(132)** du moyen de sollicitation **(130),** et
dans lequel la seconde poignée **(108)** est accouplée de manière fixe à la seconde section de fixation **(124)** par la seconde extrémité **(132)** du moyen de sollicitation **(130).**

3. Outil électrique **(100)** selon la revendication 2,
dans lequel la première extrémité **(132)** du moyen de sollicitation **(130)** s'étend en outre à travers une première ouverture **(103),** en particulier une ouverture traversante **(103),** dans la première poignée **(102)** de telle sorte que la première poignée **(102)** est accouplée de manière fixe à la première partie de coupe **(112),** et
dans lequel la seconde extrémité **(134)** du moyen de sollicitation **(130)** s'étend en outre à travers une seconde ouverture **(109),** en particulier une ouverture traversante **(109),** dans la seconde poignée **(108)** de telle sorte que la seconde poignée **(108)** est accouplée de manière fixe à la seconde partie de coupe **(120).**

4. Outil de coupe **(100)** selon l'une quelconque des revendications précédentes,
dans lequel la première poignée **(102)** et la première section de fixation **(116)** sont accouplées sans outil, en particulier accouplées de manière fixe à la main et sans l'utilisation d'un outil, et/ou
dans lequel la seconde poignée **(108)** et la seconde section de fixation **(124)** sont accouplées sans outil, en particulier accouplées de manière fixe à la main et sans l'utilisation d'un outil.

5. Outil de coupe **(100)** selon l'une quelconque des revendications précédentes,
dans lequel la première section de fixation **(116)** comprend un premier moyen de fixation **(136),** et/ou
dans lequel la seconde section de fixation **(124)** comprend un second moyen de fixation **(138).**

6. Outil électrique **(100)** selon la revendication 5,
dans lequel la première poignée **(102)** comprend la première ouverture **(103),**
dans lequel la première ouverture **(103)** et le premier moyen de fixation **(136)** se chevauchent, et sont agencés à l'opposé de la seconde section de fixation **(124),** lorsque la première section de fixation **(116)** est insérée dans la première poignée **(102).**

7. Outil de coupe **(100)** selon la revendication 5 ou la revendication 6,
dans lequel la seconde poignée **(108)** comprend la seconde ouverture **(109),**
dans lequel la seconde ouverture **(109)** et le second moyen de fixation **(138)** se chevauchent, et sont agencés à l'opposé de la première section de fixation **(116),** lorsque la seconde section de fixation **(124)** est insérée dans la seconde poignée **(108).**

8. Outil de coupe **(100)** selon l'une quelconque des revendications 5 à 7,
dans lequel le premier moyen de fixation **(136)** et le second moyen de fixation **(138)** sont formés sensiblement identiques, et/ou
dans lequel le premier moyen de fixation **(136)** et/ou le second moyen de fixation **(138)** est/sont une saillie **(140)** avec deux évidements adjacents **(142),** et/ou
dans lequel le premier moyen de fixation **(136)** et/ou le second moyen de fixation **(138)** est/sont conçu(s) pour venir en prise avec une extrémité respective **(132, 134)** du moyen de sollicitation **(130),** et/ou
en particulier, dans lequel les deux évidements adjacents **(142)** sont formés adjacents à la saillie **(140),** et sur des côtés opposés de la saillie **(140).**

9. Outil de coupe **(100)** selon l'une quelconque des revendications 5 à 7,
dans lequel le premier moyen de fixation **(136)** et/ou le second moyen de fixation **(138)** est/sont une saillie allongée conçue pour mettre en prise la première extrémité **(132)** respectivement avec la seconde extrémité **(134)** du moyen de sollicitation **(130).**

10. Outil de coupe **(100)** selon l'une quelconque des revendications précédentes,
dans lequel le moyen de sollicitation **(130)** est au moins l'un parmi un ressort de compression, un ressort hélicoïdal, une lame de ressort, et un ressort plat.

11. Outil de coupe (100) selon l'une quelconque des revendications précédentes,
dans lequel la première poignée **(102)** et/ou la seconde poignée **(108)** sont formées par au moins l'un parmi les éléments suivants : moulage par injection, moulage sous pression d'aluminium, moulage sous pression de zinc, moulage, technologie d'impression 3D, en particulier métal ou plastique, frittage et poinçonnage.

12. Outil de coupe (100) selon l'une quelconque des revendications précédentes,
dans lequel la première poignée **(102)** ou la seconde poignée **(108)** comprend un élément de verrouillage coulissant **(144)** pour verrouiller sélectivement une rotation relative de la première partie de coupe **(112)** et de la seconde partie de coupe **(120)** de l'outil de coupe **(100).**

13. Outil de coupe **(100)** selon l'une quelconque des revendications précédentes,
dans lequel la première partie de coupe **(112)** et la seconde partie de coupe **(120)** sont accouplées de manière pivotante l'une à l'autre au niveau du point de pivotement **(P1)** à l'aide d'une vis de blocage **(128)** et d'un écrou de serrage **(129),** en particulier un écrou hexagonal **(129),** un écrou moleté ou un écrou à encoches, vissé sur la vis de blocage **(128).**

14. Outil de coupe **(100)** selon l'une quelconque des revendications précédentes,
dans lequel l'outil de coupe **(100)** est choisi dans le groupe constitué d'un sécateur, d'une cisaille, d'un dispositif d'élagage et de ciseaux.

15. Outil de coupe **(100)** selon l'une quelconque des revendications précédentes,
dans lequel l'outil de coupe **(100)** est un outil de coupe d'enclume ou un outil à coupe franche.
